Europäisches Patentamt

European Patent Office

Office européen des brevets

(11) Publication number: **0 446 791 A2**

# EUROPEAN PATENT APPLICATION

(21) Application number: 91103524.4

(51) Int. Cl.5: **B62L 1/00**, F16D 65/04

(22) Date of filing: **07.03.91**

(30) Priority: **16.03.90 JP 27389/90 U**

(43) Date of publication of application:
**18.09.91 Bulletin 91/38**

(84) Designated Contracting States:
**AT BE CH DE DK ES FR GB GR IT LI LU NL SE**

(71) Applicant: SHIMANO INDUSTRIAL CO., LTD.
**77, Oimatsucho 3 cho**

**Sakai-shi Osaka 590(JP)**

(72) Inventor: **Nagano, Masashi**
**74-19, Midorigaoka**
**Izumi-shi, Osaka(JP)**

(74) Representative: **Säger, Manfred, Dipl.-Ing.**
**Richard-Strauss-Strasse 56**
**W-8000 München 80(DE)**

(54) Brake shoe for bicycle.

(57) A brake shoe for a bicycle has a braking face for contacting a rim of a bicycle wheel. The invention provides a rim-contact projection at least to one longitudinal end of the shoe relative to a rotary drive direction of the bicycle wheel. The projection is raised relative to the braking face and readily eliminable through contact with the rim.

FIG.1

EP 0 446 791 A2

## BACKGROUND OF THE INVENTION

### 1 FIELD OF THE INVENTION

The present invention relates to a brake shoe for a bicycle.

### 2 DESCRIPTION OF THE RELATED ART

Generally, for assembling brake shoes with a brake apparatus of a bicycle, it is preferred that the shoes be placed with the so-called, 'toe-in' orientation so that a rear portion of a braking face of the shoe relative to rotary drive direction of a bicycle wheel is positioned sightly distant from the rim. For this reason, according to the convention, a spherical spacer is provided to a brake-shoe attaching portion of the brake apparatus, and a user effects the assembly while manually maintaining the toe-in orientation of the shoe (e.g. Japanese published utility model gazette No. 55-21905).

However, with such manual fine adjustment of the toe-in orientation, because the spherical spacer has relatively large freedom of movement, there tends to occur error in the assembled position of the brake shoe in the vertical direction as well as the diagonal direction. As a result, the attached brake shoe often fails to afford its full braking effect.

Taking the above state of the art into consideration, the primary object of the present invention is to provide an improved brake shoe which can be readily assembled with a brake apparatus with accurate adjustment for toe-in orientation.

## SUMMARY OF THE INVENTION

For accomplishing the above-noted object, a brake shoe for a bicycle, according to first characterizing features of the present invention, comprises a braking face for contacting a rim of a bicycle wheel and a rim-contact projection provided at least to one longitudinal end of the shoe relative to a rotary drive direction of the bicycle wheel, said projection being raised relative to said braking face. With these first features of the invention, when the braking face is brought into abutment against the rim while positioning the projection on the rear side in the rotary direction, this rear portin of the braking face becomes inclined, by the projection, away from the rim, thereby providing the entire shoe with toe-in orientation. Thereafter, with temporaty fixing of the brake shoe to e.g. the spherical spacer, the brake shoe is brought into contact with the rim through operation of the brake apparatus. In this way, even an unexperienced user can easily provide the brake shoe with accurate and proper amount of toe-in orientation by slanting the braking face according to the slant angle predetermined by the projection. Therefore, the user can concentrate on the other fine adjustment of the assembled posture of the brake shoe than the toe-in orientation adjustment. Thus, the entire fine positioning adjustment of the brake shoe can be effected very easily and speedily. Also, the amount of the toe-in orientation per se can conveniently vary by e.g. appropriately cutting the projection.

Consequently, according to the first features described above, the invention has achieved its intended object of providing an improved brake shoe which can be readily assembled with a brake apparatus with accurate adjustment for toe-in orientation and also with proper clearance between the shoe and the rim. Therefore, after the assembly, the brake apparatus with the invention's brake shoe can fully achieve its braking effect.

Preferably, according to a second feature of the invention, in addition to the first features, the projection is readily eliminable through friction with the rim.

With this feature, since the projection can be readily eliminated through contact with the rim, after some actual run of the bicycle, the brake apparatus with the invention's shoe can fully achieve its braking effect like an apparatus with the conventional shoe. So that, the assembly requires no additional operation after the toe-in adjustment.

According to a third characterizing feature of the invention, the brake shoe comprises a projection-adjustable element contactable with the rim, the element having an adjustable projecting height from the braking face relative to the rim, the element being provided at least to one longitudinal end of the shoe relative to the rotary drive direction of the bicycle wheel.

With this third feature of the invention, like the construction having the first features, it is readily possible to provide the shoe with proper toe-in orientation. In addition, through adjustment of the adjustable projecting height of the element, the user can readily adjust the toe-in angle. Furthermore, after some use of the bicycle, it is possible to re-adjust the toe-in orientation by again projecting the element relative to the rim.

Incidentally, in embodying the present invention, it is conceivable to form the rim-contact projection integrally with the braking face.

Further and other objects, features and effects of the invention will become more apparent from the following more detailed description of the embodiments of the invention with reference to the accompanying drawings.

## BRIEF DESCRIPTION OF THE DRAWINGS

Accompanying drawings illustrate preferred embodiments of a brake shoe for a bicycle relating to the present invention; in which,

Fig. 1 is a partially cutaway plane view showing a bicycle brake apparatus with which a brake shoe of one embodiment is assembled,

Fig. 2 is a plane view of Fig. 1,

Fig. 3 is an exploded view of the brake apparatus,

Figs. 4 through 11 show other embodiments of the invention; in which,

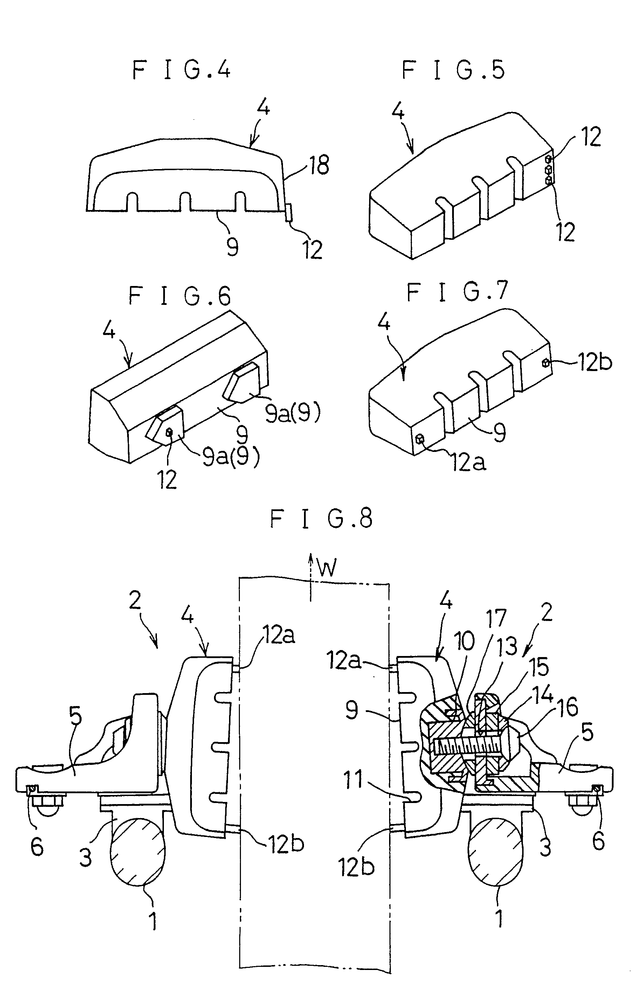

Fig. 4 is a plane view of a brake shoe,

Figs. 5 through 7 are perspeotive views of brake shoes,

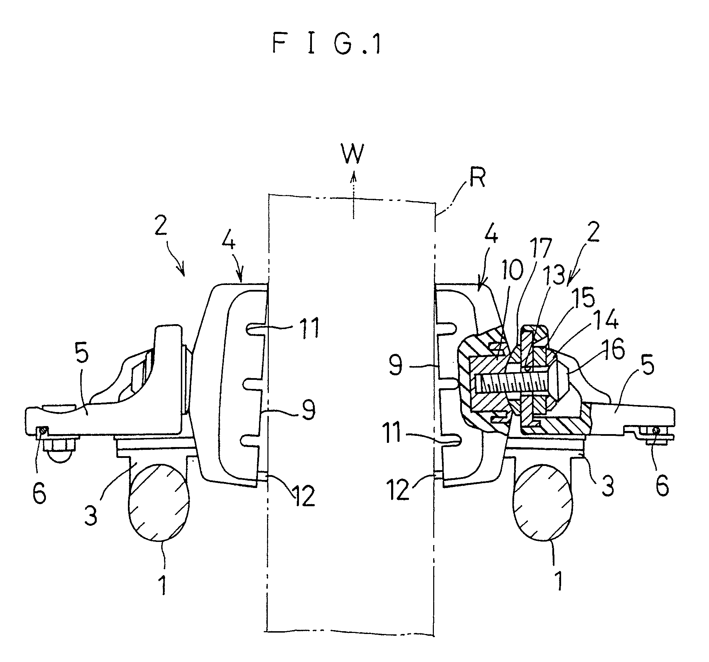

Fig. 8 is a view corresponding to Fig. 1,

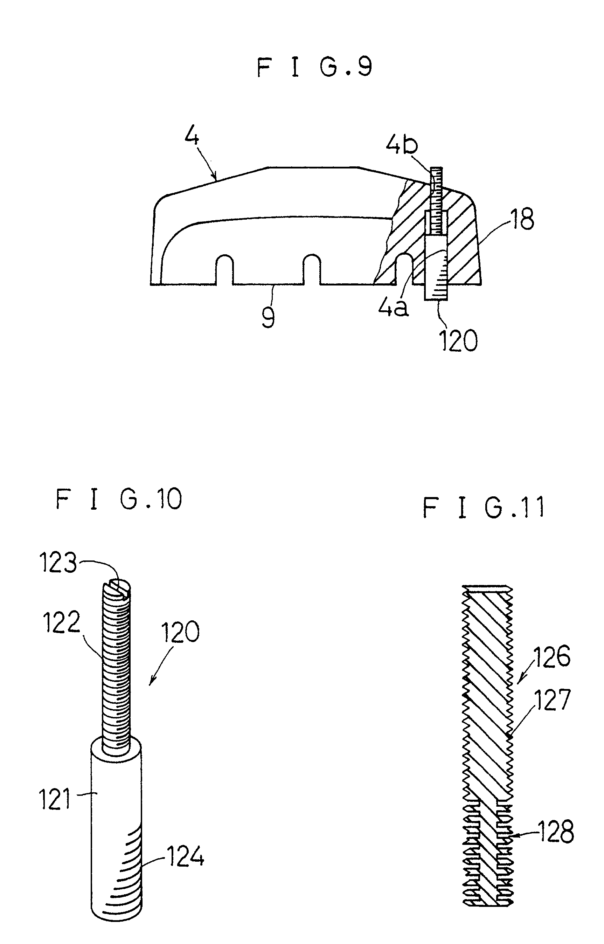

Fig. 9 is a section view,

Fig. 10 is an overall view of a projection-adjustable element, and

Fig. 11 is a section of the projection-adjustment element.

## DESCRIPTION OF THE PREFERRED EMBODIMENTS

Preferred embodiments of a brake shoe for a bicycle relating to the present invention will now be described in particular with reference to the accompanying drawings.

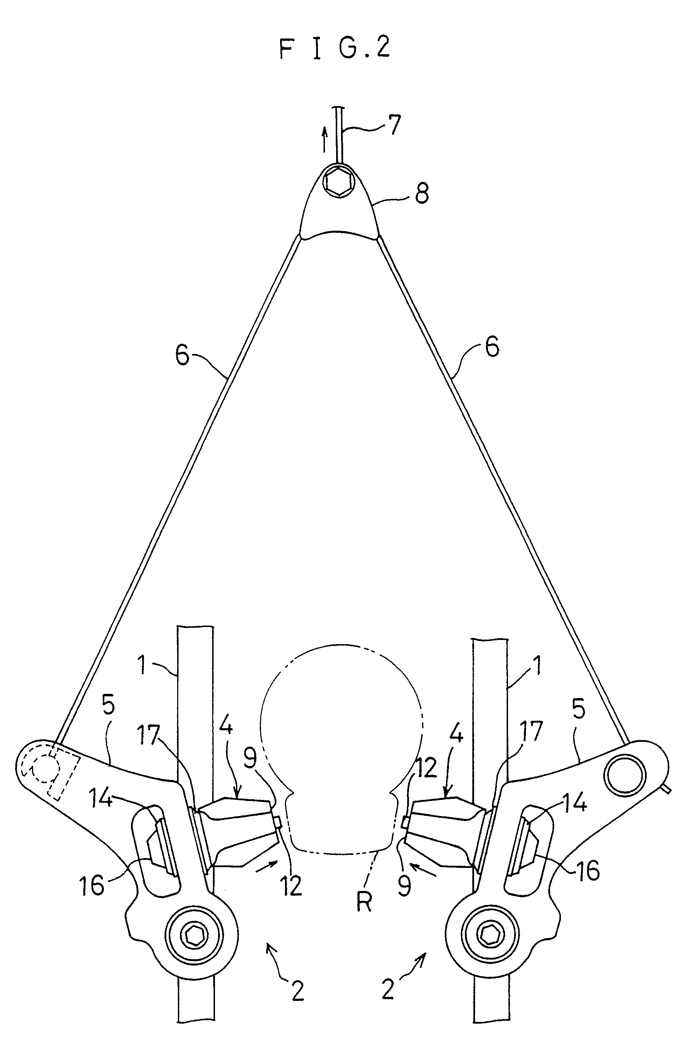

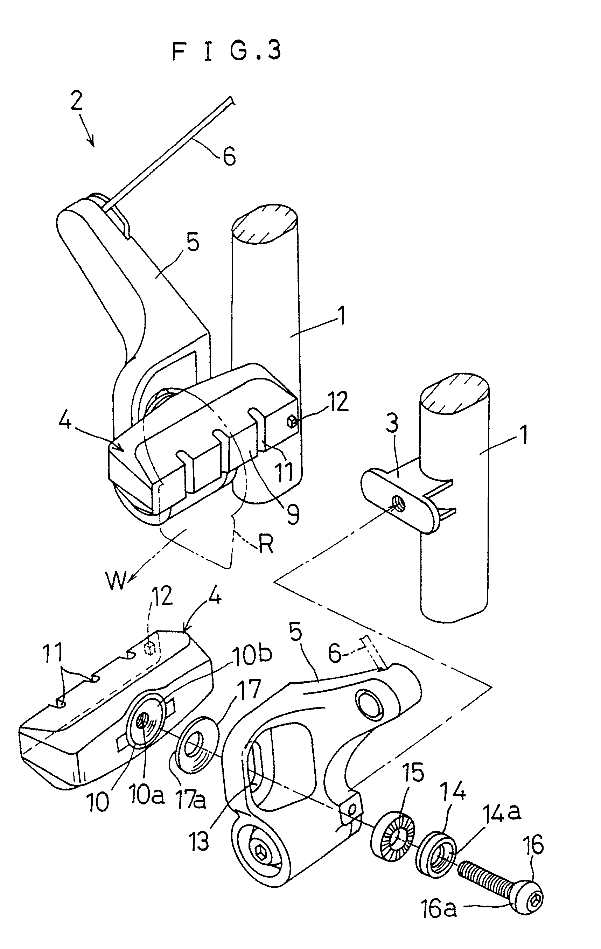

Figs. 1 through 3 show a cantilevr type bicycle brake apparatus 2 attached to a pair of front forks 1 of an all-terrain type bicycle. A stationary member 3 fixed to each front fork 1 swingably supports a movable member 5 carrying a brake shoe 4, with the movable member 5 being urged in a direction to move the brake shoe 4 away from a rim R. Between leading ends of the movable members 5, there is extended a center wire 6, to an intermediate position of which there is stopped a wire holder 8 connected with a brake control wire 7 extending from an unillustrated front brake apparatus. In operation, as the intermediate position of the center wire 6 is pulled by operation of the brake apparatus, the opposed brake shoes 4 are moved to bind-contact the rim 4 against the urging force, thus braking a rotating bicycle wheel.

The body of each brake shoe 4 is formed of hard rubber material shaped substantially like a hexagonal column. The brake shoe 4 has one longitudinal face as a braking face 9 and an attaching element 10 having a screw hole 10a is inserted through a face opposite to the braking face 9. The braking face 9 transversely defines a plurality of grooves 11 for increase of friction. Further, about the screw hole 10a of the attaching element 10, there is formed a first concave semi-spherical face 10b. On the other hand, the braking face 9 integrally forms a projection 12 adjacent a rear longitudinal end thereof relative to a rotary drive direction W of the bicycle wheel. The projecting height of this projection 12 is so predetermined as to provide the shoe with an appropriate amount of toe-in orientation as the braking face 9 is brought into contact with the rim R. Further, the projection 12 has a reduced cross section extending normal to the height direction, so that the projection 12 can be easily worn away or chipped away, at its root, from the braking face 9 through some contact with the rim R after the assembly.

For assembling the brake shoe 4 to the brake apparatus, the movable member 5 defines, at an intermediate position thereof, a vertically elongate slot 13 into which an attaching bolt 16 fitted with first and second spacers 14, 15 is inserted. Then, after inserting a third spacer 17 through this bolt 16, a leading free end of the bolt 16 is screwed into the screw hole 10a of the attaching member 10. The third spacer 17 forms, at one side thereof, a first convex semi-spherical face 17a snugly contactable with the first concave semi-spherical face 10b. Also, the first spacer 14 forms, at one side thereof, a second concave semi-spherical face 14a while the bolt 15 forms, at the root of its bolt head, a second convex semi-spherical face 16a snugly contactable with the second concave semi-spherical face 14a. Accordingly, through frictional contact of these concave and convex semi-spherical faces 10a, 14a, 17a, 16a, the brake shoe 4 can be attached to the movable member 5 while adjusting its posture along the spherical faces.

Next, a typical assembly of the brake shoe 4 of the invention with the toe-in orientation will be detailed.

First, the bolt 16 is slightly loosened to allow the brake shoe 4 to longitudinally align with the rotary direction W of the rim R and to adjust the vertical position of the shoe 4 relative to the rim R. Second, the bolt 16 is tightened to an extent for allowing fine adjustment after the tightening. Then, the brake apparatus is actuated to bring the brake shoe 4 into contact with the rim R. With this, through contact between the projection 12 and the rim R, the rear portion of the braking face 9 in the rotary direction W is moved away from the rim R, thus providing the shoe with proper toe-in orientation. Thereafter, when the bolt 16 is tightened completely, the brake shoe 4 is fixedly assembled with the brake adpparatus with maintaining the proper toe-in orientation. As described hereinbefore, the projection 12 will be readily worn away or chipped away, at its root, from the shoe 4 through successive contact with the rim R during an actual bicycle run, the projection 12 will not affect the riding feel of the bicycle.

Some other embodiments of the invention will be specifically described next.

(a) In the foregoing embodiment, the projection 12 is provided to the braking face 9 of the brake shoe 4. Instead, as illustrated in Fig. 4, it is conceivable for the projection 12 to project from a side face 18 of the brake shoe 4.

(b) In the foregoing embodiment, the projection 12 is provided to only one longitudinal end of the shoe 4. Alternately, as shown in Fig. 5, it is possible to provide a plurality of the projections 12 at a longitudinal region of the shoe 4.

(c) In the foregoing embodiment, the projection 12 is formed integral with the braking face 9. Instead, the projection 12 can be formed as a separate entity from the braking face 9. In this case, the projection 12 is to be attached to the braking face 9 by an appropriate affixing means. Further, for rendering the projection readily eliminable through its contact with the rim, it is conceivable to use the affixing means of weak affixing force. Or, the separate type projection can be formed of soft or brittle material. Further, it is possible for the projection to be cuttable by means of a nipper, cutter or the like. Furthermore, it is conceivable to reduce the root of the projection so that the projection can be readily eliminated by twisting with the user's finger.

(d) The braking face 9 need not be formed flat. For instance, as shown in Fig. 6, the face 9 per se can be formed uneven. What is essential for the invention is that the projection 12 be raised relative to a portion 9a of the face 9 which provides the braking effect at the initial contact with the rim R.

(e) As shown in Fig. 7, it is conceivable to provide the projection 12 at two of the opposite longitudinal ends of the brake shoe 4. In this case, prior to the assembly, either of the two projections 12 should be cut away. This is advantageous for reducing the manufacturing costs of the shoe since the shoe can be used in either direction, the right or the left.

(f) For further modifying the alterante construction of the above (e), as shown in Fig. 8, the two projections 12a and 12b provided at the opposite longitudinal ends of the shoe can have different projecting amounts. With this, through the adjustment described hereinbefore, it becomes possible to provide the brake shoe 4 not only with the toe-in orientation but also with clearance with the rim R.

(g) Instead of providing the projection 12 only to the rear portion of the brake shoe 4 as described in the foregoing embodiment, it is also conceivable to provide the projection only to a forward portion of the shoe 4 so as to provide with shoe 4 with a kind of 'toe-out' orientation. In this case, the forward portion of the shoe 4 is positioned distant from the rim R.

(h) In place of providing the projection 12 to the brake shoe 4, it is alos conceivable to provide a projection-adjustable element 120 having an adjustable projecting height from the braking face relative to the rim. This projection-adjustable element 120, as illustrated in Fig. 10, includes a large-diameter portion 121, a small-diameter threaded portion 122 and a turning slit 123; and the entire element is formed of synthetic resin material. The large-diameter portion 121 defines a gauge 124. Further, as illustrated in Fig. 9, through this element 120, there are extended a large-diameter through hole 4a for slidably contacting the large-diameter portion 121 to the brake shoe 4 and a short, small-diameter through hole 4b for forcibly screwing the small-diameter threaded portion 122.

For use, the turning slit is pivoted by means of a driver to expose the large-diameter portion 121 from the braking face 9 by an appropriate amount, thus effecting the toe-in orientation adjustment like the foregoing embodiment. After the adjustment, when the brake apparatus is actuated through an actual run, the braking face 9 pressedly contacts the rim and pushes the projection-adjustable element 120. In this, since the small-diameter through hole 4b has a shorter depth, the element 120 readily retracts from the rim, thus unaffecting the rim rotation thereafter. Also, because of the increased diameter of the large-diameter portion 4a relative to the small-diameter portion 4b, the element 120 wil not drop off, through e.g. vibration during braking, at the opposite side of the braking face 9.

(i) Fig. 11 shows a different type of projection-adjustable element 127. This element 127 is formed entirely of such material as rubber. The element 127 defines a threaded portion 127 extending the entire length of the element 127. Further, at the leading end, there is formed an annular groove 128, so that the area exposed from the braking face can be readily eliminated through contact with the rim R.

(j) In the constructions of the above (h) and (i), it is conceivable to separately provide the projection-adjustable element 120, 126 to both longitudinal ends of the shoe 4. Further, as the means for adjusting the porjection height from the braking face 9, in place of the screw means, any other friction means can be employed, such as a smooth pin fitted by pressure into a hole.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

**Claims**

1. A brake shoe for a bicycle, having a braking face 9 for contacting a rim of a bicycle wheel;
   characterized by
   a rim-contact projection 12 provided at least to one longitudinal end of the shoe relative to a rotary drive direction W of the bicycle wheel, said projection 12 being raised relative to said braking face 9.

2. A brake shoe as defined in Claim 1,
   characterized in that
   said projection 12 is readily eliminable through contact with the rim.

3. A brake shoe as defined in Claim 2,
   characterized in that
   said projection 12 is formed integral with said braking face 9.

4. A brake shoe as defined in Claim 3,
   characterized in that
   at least said projection 12 and said braking face 9 are formed of rubber material.

5. A brake shoe as defined in Claim 4,
   characterized in that
   said projection 12 is disposed at a rear longitudinal portion of said shoe relative to said rotary drive direction W of the bicycle wheel.

6. A brake shoe as defined in Claim 1,
   characterized in that
   said projection 12 is eliminable from the shoe.

7. A brake shoe for a bicycle, having a braking face 9 for contacting a rim of a bicycle wheel;
   characterized by
   a rim-contact, projection-adjustable element 120, 126 provided at least to one longitudinal end of the shoe relative to a rotary drive direction W of the bicycle wheel, said element 120, 126 having an adjustable projecting height from said braking face 9 relative to said rim.

# F I G .1

# F I G.2

# F I G.3

F I G.4

F I G.5

F I G.6

F I G.7

F I G.8

# F I G . 9

4
4b
18
9
4a
120

# F I G . 10

123
122
120
121
124

# F I G . 11

126
127
128